# EUROPEAN PATENT APPLICATION

(11) **EP 3 392 568 A1**
(43) Date of publication of application: **24.10.2018**
(21) Application number: 18168327.7
(22) Date of filing: 19.04.2018
(51) Int. Cl.: F23R 3/00, F23R 3/50, F23R 3/06

(54) **Combustor liner panel end rail matching heat transfer features**

(30) Priority: 19.04.2017 US 201715491047
(71) Applicant: United Technologies Corporation, Farmington, CT 06032 (US)
(72) Inventor: MORTON, Jeffrey T., Manchester, CT Connecticut 06040 (US); QUACH, San, Southington, CT Connecticut 06489 (US)
(74) Representative: Dehns

(57) **Abstract**

A combustor section of a turbine engine includes a first liner panel (65) including a first end rail (67). The first end rail (67) includes a protruding heat transfer feature (82). A second liner panel (64) includes a second end rail (68) disposed proximate the first end rail (67). The second end rail (68) includes a recess (84) matching the protruding heat transfer feature (82) of the first end rail (67).

## Description

### BACKGROUND

A gas turbine engine typically includes a fan section, a compressor section, a combustor section and a turbine section. Air entering the compressor section is compressed and delivered into the combustion section where it is mixed with fuel and ignited to generate a high-energy exhaust gas flow. The high-energy exhaust gas flow expands through the turbine section to drive the compressor and the fan section. The compressor section typically includes low and high pressure compressors, and the turbine section includes low and high pressure turbines.

The combustor section includes a chamber where the fuel/air mixture is ignited to generate the high-energy exhaust gas flow. The temperatures within the combustor are typically beyond practical material capabilities. Therefor liner panels are provided within the chamber that are cooled by a cooling airflow. The cooing airflow impinges on a cold side of a liner panel and then is injected through the liner panel to provide an insulating film of cooling air. Disruptions or gaps between end rails of each of the liner panels may experience non-uniform cooling that result in temperatures greater than desired. Higher liner panel temperatures can result in premature degradation and loss of combustor efficiency.

### SUMMARY

From a first aspect, there is provided a combustor section of a turbine engine that includes a first liner panel including a first end rail. The first end rail includes a protruding heat transfer feature. A second liner panel includes a second end rail disposed proximate the first end rail. The second end rail includes a recess matching the protruding heat transfer feature of the first end rail.

In an embodiment according to the above, the first end rail and the second end rail define an interface between the first liner panel and the second liner panel.

In another embodiment according to any of the above, the interface extends in a direction parallel to a combustor longitudinal axis.

In another embodiment according to any of the above, the interface extends in a direction transverse to a combustor longitudinal axis.

In another embodiment according to any of the above, the first end rail and the second end rail are angled relative to a hot side of respective ones of the first liner panel and the second liner panel.

In another embodiment according to any of the above, the protruding heat transfer feature of the first end rail fits at least partially within the recess on the second end rail.

In another embodiment according to any of the above, the first end rail is disposed at a periphery of the first liner panel and the second end rail is disposed at a periphery of the second liner panel.

In another embodiment according to any of the above, each of the first end rail and the second end rail space the corresponding first liner panel and the second liner panel radially apart from a combustor shell to define a cooling air impingement chamber.

In another embodiment according to any of the above, at least one of the first end rail and the second end rail define an airflow passage for cooling airflow to flow between the first end rail and the second end rail past the protruding heat transfer feature and the recess.

There is also provided a turbine engine that includes a combustor assembly including an outer shell supporting a first liner panel and a second liner panel. The first liner panel includes a first end rail including a plurality of protruding heat transfer features and the second liner panel includes a second end rail having a plurality of recesses corresponding to the protruding heat transfer features.

In another embodiment according to any of the above, each of the plurality of heat transfer features are receivable within a corresponding one of the plurality of recesses.

In another embodiment according to any of the above, the first end rail and the second end rail define an interface between the first liner panel and the second liner panel.

In another embodiment according to any of the above, at least one of the first end rail and the second end rail define an airflow passage for communicating cooling airflow into the interface.

In another embodiment according to any of the above, the first end rail and the second end rail are angled relative to a hot side of each of the first liner panel and the second liner panel.

In another embodiment according to any of the above, the plurality of protruding heat transfer features and the corresponding plurality of recesses are shaped as at least one of a circle, oval, chevron and rectangle.

There is also provided a method of assembling a combustor assembly of a gas turbine engine that includes defining a combustor chamber within an inner shell and an outer shell. A first liner panel is assembled to at least one of the inner shell and the outer shell to define an inner surface of the combustor chamber. The first liner panel includes a first end rail having at least one protruding heat transfer feature. A second liner panel is assembled including a second end rail to one of the inner shell and the outer shell to abut the first end rail, such that a recess of the second end rail is proximate the protruding heat transfer feature of the first end rail.

An embodiment according to the above, includes assembling the second end rail such that a portion of the protruding heat transfer feature may be received within a corresponding one of the recesses on the second end rail during operation.

Another embodiment according to any of the above, includes defining an interface between the first end rail and the second end rail and a cooling air passage into the interface to flow cooling air past the heat transfer feature and the recess.

Although the different examples have the specific components shown in the illustrations, embodiments of this disclosure are not limited to those particular combinations. It is possible to use some of the components or features from one of the examples in combination with features or components from another one of the examples.

These and other features disclosed herein can be best understood from the following specification and drawings, the following of which is a brief description.

### BRIEF DESCRIPTION OF THE DRAWINGS

Figure 1 is a schematic view of an example gas turbine engine.
Figure 2 is a cross section view of a portion of an example combustor.
Figure 3 is a perspective view of a section of the example combustor.
Figure 4 is a perspective view of an example liner panel of the combustor.
Figure 5 is a sectional view of an interface between liner panels of the combustor.
Figure 6 is another example interface between liner panels of the combustor.
Figure 7 is a schematic view of an interface of each side of the interface between liner panels.
Figure 8 is an enlarged cross-sectional view of the interface between liner panels.
Figure 9 is a schematic view illustrating examples of different shapes of example heat transfer features.

### DETAILED DESCRIPTION

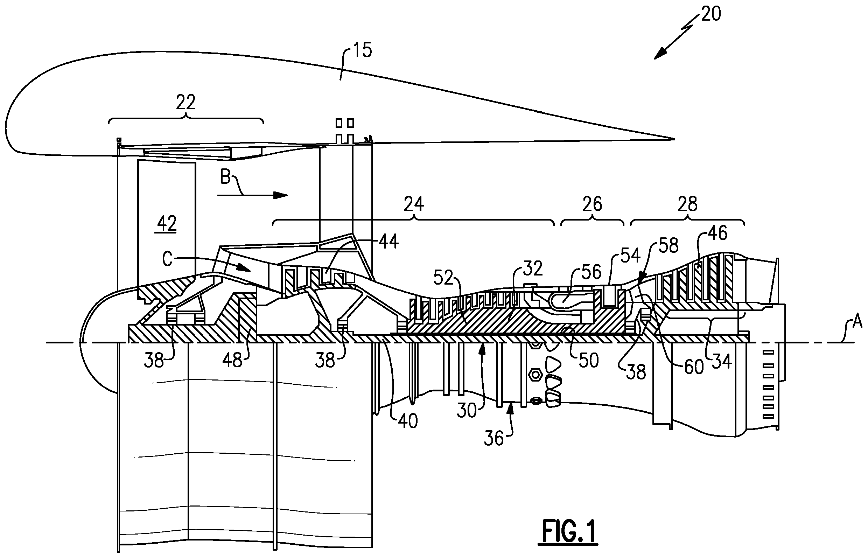

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flow path B in a bypass duct defined within a nacelle 15, while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a first (or low pressure) compressor 44 and a first (or low pressure) turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a second (or high pressure) compressor 52 and a second (or high pressure) turbine 54. A combustor 56 is arranged in the exemplary gas turbine 20 between the high pressure compressor 52 and the high pressure turbine 54. A mid-turbine frame 58 of the engine static structure 36 is arranged generally between the high pressure turbine 54 and the low pressure turbine 46. The mid-turbine frame 58 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 58 includes airfoils 60 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six, with an example embodiment being greater than about ten, the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten, the fan diameter is significantly larger than that of the low pressure compressor 44, and the low pressure turbine 46 has a pressure ratio that is greater than about five. The low pressure turbine 46 pressure ratio is pressure measured prior to inlet of the low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet (10,668 meters). The flight condition of 0.8 Mach and 35,000 ft (10,668 meters), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R) / (518.7 °R)]^{0.5} (where °R = K x 9/5). The "Low corrected fan tip speed" as disclosed herein according to one non-limiting embodiment is less than about 1150 ft / second (350.5 meters/second).

The example gas turbine engine includes the fan 42 that comprises in one non-limiting embodiment less than about twenty-six fan blades. In another non-limiting embodiment, the fan section 22 includes less than about twenty fan blades. Moreover, in one disclosed embodiment the low pressure turbine 46 includes no more than about six turbine rotors schematically indicated at 34. In another non-limiting example embodiment the low pressure turbine 46 includes about three turbine rotors. A ratio between the number of fan blades 42 and the number of low pressure turbine rotors is between about 3.3 and about 8.6. The example low pressure turbine 46 provides the driving power to rotate the fan section 22 and therefore the relationship between the number of turbine rotors 34 in the low pressure turbine 46 and the number of blades 42 in the fan section 22 disclose an example gas turbine engine 20 with increased power transfer efficiency.

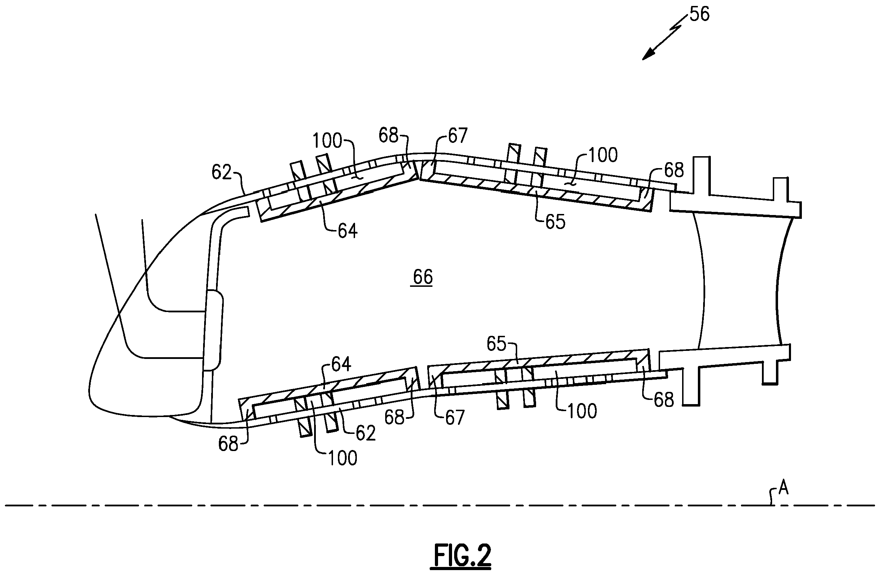

Referring to Figure 2 with continued reference to Figure 1, the combustor 56 includes inner and outer shells 62 that support liner panels 64 and 65. The liner panels 64 and 65 define the inner surface or hot side within a combustor chamber 66. The combustor shell 62 may be formed by hydroforming of a sheet metal alloy to provide the generally cylindrical inner and outer shells that define an annular combustor that is disposed about the engine longitudinal axis A. Each of the liner panels 64, 65 is generally a rectilinear panel with a circumferential arc that includes interfaces between different panels that are disposed both radially and axially within the combustor 56. The example combustor 56 includes a plurality of the forward liner panels 64 and aft liner panels 65. Each of the liner panels 64 and 65 define a plenum 100 that receives cooling airflow through openings within the outer shell 62.

As appreciated, the example combustor is shown by way of example and many different configurations of mating liner panels could be utilized and are within contemplation of this disclosure.

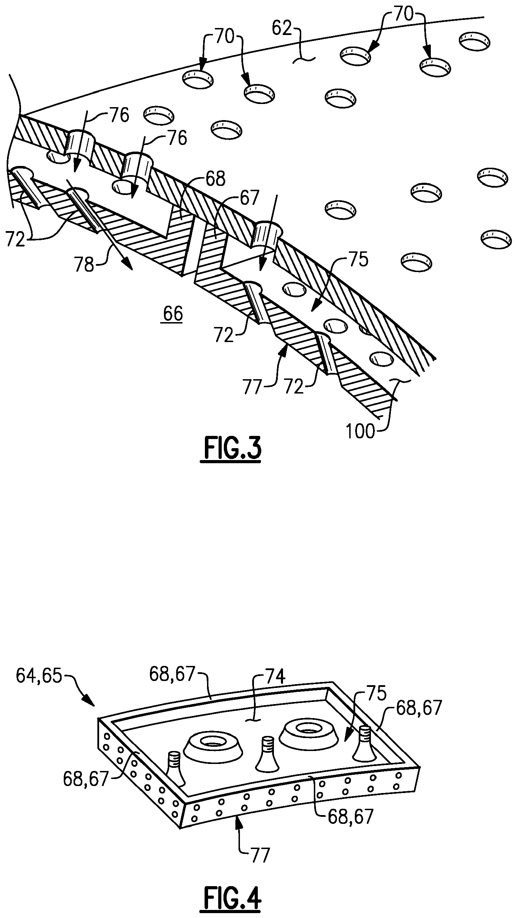

Referring to Figure 3 with continued reference to Figure 2, the example outer shell 62 includes a plurality of openings 70. Cooling air 76 is communicated through the openings 70 and impinges on a cold side 75 of each of the panels 64, 65. The impingement cooling air 76 flows through the cooling air hole 70 within the outer shell 62 into the plenum 100 formed by each of the liner panels 64, 65. The liner panels include openings 72 through which air is communicated along the inner surface of the combustor chamber 66. Airflow 78 through the opening 72 creates an insulating airflow along the inner surface of the combustor chamber 66 and the hot side 77 of each of the panels 64, 65. This cooling airflow enables the use of materials that may not otherwise be suitable for use in the high temperature environment within the combustor chamber 66.

Referring to Figure 4 with continued reference to Figure 3, each of the panels 64, 65 includes a central region 74 that is a substantial rectangular shape curved to match the curvature of the shell 62 and is surrounded by peripheral rails 67, 68. In this example, the rails 67, 68 extend about a periphery of the center flat section 74. Throughout this disclosure, the peripheral rails 67, 68 will be referred interchangeably as both an end rail 67, 68 and a peripheral rail 67, 68. The peripheral rails 67, 68 sit against an inner surface of the combustor shell 62 to define the plenum 100 for cooling airflow.

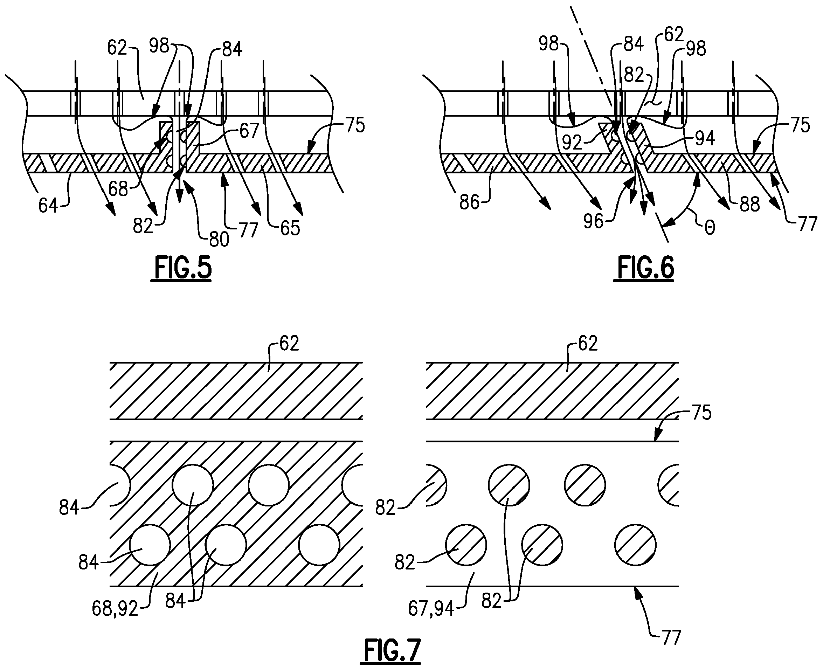

Referring to Figure 5, an example interface 80 between peripheral end rails 68 and 67 of corresponding liner panels 64, 65 is illustrated. Although it is desirable for peripheral end rails 67, 68 to seal against the radially inner surface of the outer shell 62 some leakage flow 98 will be communicated into the interface 80. This leakage flow 98 flows through the interface 80.

The interface 80 is arranged such that cooling air holes 72 may not be placed adjacent to the end rails 67, 68 and therefore the end rails 67, 68 may be susceptible to heating beyond that desired for the liner panels within the combustor chamber 66. The example peripheral rails 67, 68 includes heat transfer features to increase heat transfer efficiency within the interface 80. In this example, the heat transfer features include a protruding heat transfer feature 82 and a corresponding recess 84. The protruding heat transfer feature 82 is disposed on one of the peripheral end rails 67 and the recess 84 is disposed on a corresponding end rail 68 that is proximate to the end rail 67. The heat transfer features 82 and recesses 84 provide for improved thermal transfer to maintain the end rail 68 and 67 within desired temperature ranges. In the example disclosed and shown in Figure 5, the end rails are substantially transverse to the outer shell 62.

Referring to Figure 6, in another example, liner panel 86 includes end rail 92 and liner panel 88 includes end rail 94. The end rails 92, 94 are disposed at an angle Θ relative to the hot side 77. The angle Θ provides improved cooling airflow through the interface 96 and along the hot side 77. In this example, each of the end rails 92 and 94 include mating heat transfer features 82, 84. The end rail 92 includes recesses 84 that correspond with the protruding heat transfer features 82 on the end rail 94. The end rails angled along angle Θ direct airflow in a direction similar to the angle of the openings 72 that provide for the insulating cooling film air flow.

Referring to Figure 7 with continued reference to Figures 5 and 6, each of the heat transfer features 84, 82 are shown for each of the end rails 68, 67, 92 and 94. The protruding heat transfer features 82 are arranged such that they are directly opposite of a corresponding recess 84 disposed in the other of the end rails 68, 67, 92 and 94. Because the protruding features 82 are disposed directly across from a corresponding recess 84, thermal growth of the end panels 67, 68, 92 and 94 is accommodated such that one of the protruding features 82 may extend at least partially into a recess 84 in a corresponding end rail.

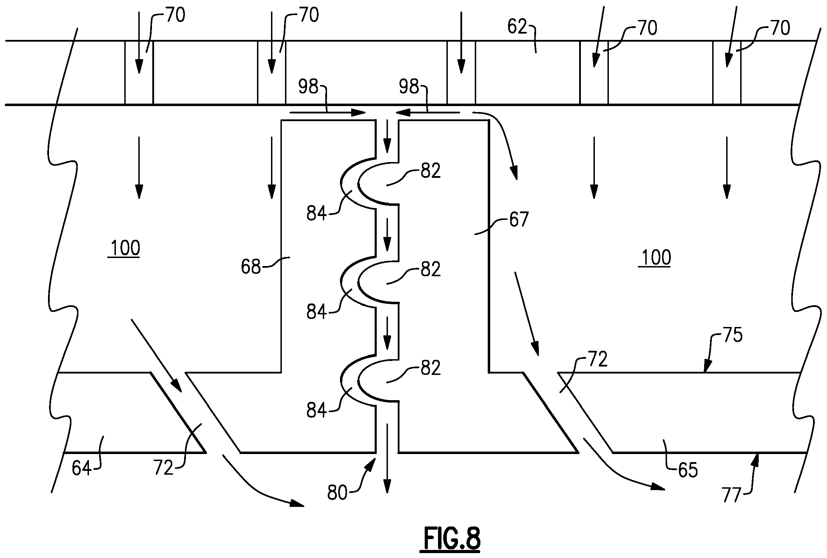

Referring to Figure 8, the example interface 80 shown in Figure 5 is enlarged to provide a better view of the corresponding placement of the protruding heat transfer features 82 and the corresponding recesses 84. During operation each of the liner panels 64, 65 encounters extreme temperatures and therefore are mounted to accommodate thermal expansion. The heat transfer features 82, 84 accommodate this thermal expansion by being directly across from one another such that a protruding heat transfer feature 82 may extend at least partially into a corresponding recess 84. As is shown in Figure 8, each of the protruding portions 82 is directly across a recess 84 such that thermal expansion is accommodated by enabling a protruding features 82 to extend at least partially into a recess 84.

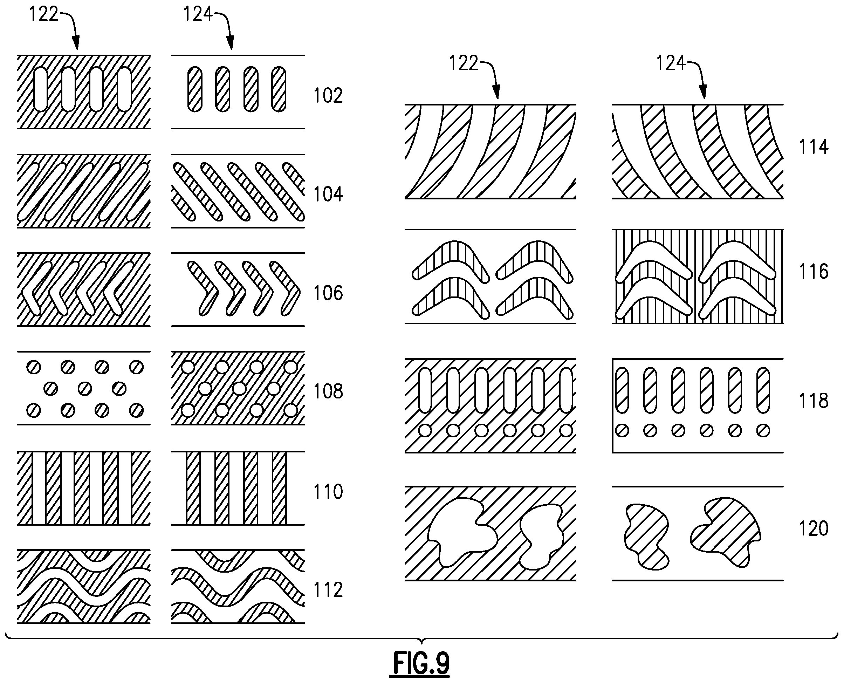

Referring to Figure 9 with continued reference to Figures 7 and 8, the previous disclosures shown by way of example of the heat transfer features 82 and 84 disclose substantially circular heat transfer protrusions 82 and recesses 84. However, other shapes are within the contemplation of the disclosure and several examples are illustrated in Figure 9. In Figure 9, the recesses 122 and corresponding protruding heat transfers 124 are illustrated. In this example, substantially oval or rectangular shaped surfaces are illustrated at 102. Those rectangular surfaces may also be angled relative to the outer shell 64 as is shown at 104. The heat transfer features 106 includes chevrons corresponding with a mating recessed chevron feature illustrated at 106. The heat transfer features and corresponding recesses shown at 108 include substantially circular features that include an identical orientation and position to enable the protruding heat transfer features to extend into a corresponding recess.

The heat transfer features that are illustrated at 110 include ridges that extend along the entire width of the liner panel and correspond as alternating ridges and valleys illustrated at 110. Another possible shape configuration could be corresponding wave shapes as is shown at 112.

Other possible heat transfer shapes include a curved wave as illustrated at 114 or chevrons 116 that are orientated within the width of each end rail.

Moreover, as illustrated at 118 different shapes could also be combined with such that each protruding feature 124 is disposed opposite a correspondingly shaped recess 122.

Moreover, while specific symmetrical shapes have been illustrated and disclosed by way of example, other uneven shapes could be utilized as is shown at 120 as long as a corresponding mating feature is provided. Accordingly, it is within the contemplation of this disclosure that any shape could be utilized in matching protruding and recess shapes that enables the protruding portion to extend at least partially into a recess and a mating end panel to accommodate thermal growth and provide the desired thermal transfer properties within the interface.

Accordingly, the example peripheral end rails include heat transfer features that are disposed relative to corresponding recesses to provide the desired heat transfer and accommodate thermal growth within the interface between each of the liner panel sections.

Although an example embodiment has been disclosed, a worker of ordinary skill in this art would recognize that certain modifications would come within the scope of this disclosure. For that reason, the following claims should be studied to determine the scope and content of this disclosure.

## Claims

1. A combustor section (26) of a turbine engine (20) comprising:
a first liner panel (65; 88) including a first end rail (67; 94) having a protruding heat transfer feature (82; 124); and
a second liner panel (64; 86) including a second end rail (68; 92) disposed proximate the first end rail (67; 94), the second end rail having a recess (84; 122) matching the protruding heat transfer feature (82; 124) of the first end rail (67; 94).

2. A turbine engine (20) comprising a combustor assembly (56) including an outer shell (62) supporting a first liner panel (65; 88) and a second liner panel (64; 86), wherein the first liner panel (65; 88) includes a first end rail (67; 94) including a plurality of protruding heat transfer features (82; 124) and the second liner panel (64; 86) includes a second end rail (68; 92) having a plurality of recesses (84; 122) corresponding to the protruding heat transfer features (82; 124).

3. The turbine engine (20) as recited in claim 2, wherein each of the plurality of heat transfer features (82; 124) are receivable within a corresponding one of the plurality of recesses (84; 122).

4. The combustor section (26) or turbine engine (20) as recited in any preceding claim, wherein the protruding heat transfer feature (82; 124) of the first end rail (67; 94) fits at least partially within the recess (84; 122) on the second end rail (68; 92).

5. The combustor section (26) or turbine engine (20) as recited in any preceding claim, wherein the first end rail (67; 94) is disposed at a periphery of the first liner panel (65; 88) and the second end rail (68; 92) is disposed at a periphery of the second liner panel (64; 86).

6. The combustor section (26) or turbine engine (20) as recited in any preceding claim, wherein each of the first end rail (67; 94) and the second end rail (68; 92) space the corresponding first liner panel (65; 88) and the second liner panel (64; 86) radially apart from a combustor shell (62) to define a cooling air impingement chamber (100).

7. The combustor section (26) or turbine engine (20) as recited in any preceding claim, wherein at least one of the first end rail (67; 94) and the second end rail (68; 92) define an airflow passage for cooling airflow to flow between the first end rail (67; 94) and the second end rail (68; 92) past the protruding heat transfer feature (82; 124) and the recess (84; 122).

8. The combustor section (26) or turbine engine (20) as recited in any preceding claim, wherein the first end rail (67; 94) and the second end rail (68; 92) define an interface (80; 96) between the first liner panel (65; 88) and the second liner panel (64; 86).

9. The combustion section (26) or turbine engine (20) as recited in claim 8, wherein at least one of the first end rail (67; 94) and the second end rail (68; 92) define an airflow passage for communicating cooling airflow into the interface (80; 96).

10. The combustor section (26) or turbine engine (20) as recited in claim 8 or 9, wherein the interface (80; 96) extends in a direction parallel to a combustor longitudinal axis.

11. The combustor section (26) or turbine engine (20) as recited in claim 8 or 9, wherein the interface (80; 96) extends in a direction transverse to a combustor longitudinal axis.

12. The combustor section (26) or turbine engine (20) as recited in any of claims 1 to 9, wherein the first end rail (67; 94) and the second end rail (68; 92) are angled relative to a hot side (77) of respective ones of the first liner panel (65; 88) and the second liner panel (64; 86).

13. The turbine engine (20) as recited in any of claims 2 to 12, wherein the plurality of protruding heat transfer features (82; 124) and the corresponding plurality of recesses (84; 122) are shaped as at least one of a circle (108), oval (102; 104), chevron (106; 116) and rectangle (102: 104; 110).

14. A method of assembling a combustor assembly (56) of a gas turbine engine (20) comprising:
defining a combustor chamber (66) within an inner shell (62) and an outer shell (62);
assembling a first liner panel (65; 88) to at least one of the inner shell (62) and the outer shell (62) to define an inner surface of the combustor chamber (66), the first liner panel (65; 88) including a first end rail (67; 94) having at least one protruding heat transfer feature (82; 124); and
assembling a second liner panel (64; 86) including a second end rail (68; 92) to one of the inner shell (62) and the outer shell (62) to abut the first end rail (67; 94), such that a recess (84; 122) of the second end rail (68; 92) is proximate the protruding heat transfer feature (82; 124) of the first end rail (67; 94).

15. The method as recited in claim 14, including:
assembling the second end rail (68; 92) such that a portion of the protruding heat transfer feature (82; 124) is received within a corresponding one of the recesses (84; 122) on the second end rail (68; 92) during operation; and/or
defining an interface (80; 96) between the first end rail (67; 94) and the second end rail (68; 92) and a cooling air passage into the interface (80; 96) to flow cooling air past the heat transfer feature (82; 124) and the recess (84; 122).
